# EUROPEAN PATENT APPLICATION

(11) **EP 4 647 328 A1**
(43) Date of publication of application: **12.11.2025**
(21) Application number: 23914659.0
(22) Date of filing: 04.01.2023
(51) Int. Cl.: B62K 25/04

(54) **VEHICULAR HYDRAULIC SYSTEM, AND VEHICLE HEIGHT ADJUSTMENT DEVICE COMPRISING THIS VEHICULAR HYDRAULIC SYSTEM**

(71) Applicant: Astemo, Ltd., Chiyoda-ku, Tokyo 1000004 (JP)
(72) Inventor: FUJIKAWA, Yosuke, Hitachinaka-shi, Ibaraki 312-8503 (JP); MURAKAMI, Yosuke, Hitachinaka-shi, Ibaraki 312-8503 (JP)
(74) Representative: Nordmeyer, Philipp Werner
(86) International application number: PCT/JP2023/000002
(87) International publication number: WO 2024/147167

(57) **Abstract**

The vehicle hydraulic system (50) includes a hydraulic circuit (70) connecting a reservoir (60) that stores a hydraulic fluid and a jack chamber (43) of a hydraulic jack (40), a pump (80) interposed in the hydraulic circuit (70), and capable of a forward rotation operation and a reverse rotation operation, and a switching valve (100) configured to switch a flow direction in the hydraulic circuit (70). The switching valve (100) switches a flow direction in the hydraulic circuit (70) according to a change in the suction pressure and the discharge pressure of the pump (80) due to switching between the forward rotation operation and the reverse rotation operation of the pump (80).

## Description

### TECHNICAL FIELD

The present invention relates to a vehicle hydraulic system and a vehicle height adjustment device including the vehicle hydraulic system.

### BACKGROUND ART

Some straddle-type vehicles such as motorcycles include a vehicle height adjustment device for adjusting the vehicle height. The vehicle height adjustment device adjusts a spring of a suspension device in the expansion and contraction direction using a fluid supplied from a vehicle hydraulic system or a vehicle pneumatic system. Such a system technology is known based on, for example, Patent Literature 1 and Patent Literature 2.

The vehicle hydraulic system known in Patent Literature 1 includes a motor, a speed reducer that reduces the rotation speed of the motor, a piston that moves in the axial direction by rotation of a female screw of the speed reducer, a cylinder (a hydraulic fluid accommodating portion) that supplies a hydraulic fluid by movement of the piston, and a hydraulic jack that performs a jack action by the hydraulic fluid supplied from the cylinder. The length of the spring of the suspension device can be adjusted by the hydraulic fluid supplied from the cylinder. In this way, in Patent Literature 1, a so-called screw pump is implemented by a combination of the female screw, the piston, and the cylinder of the speed reducer.

The vehicle pneumatic system known in Patent Literature 2 includes an air compressor (corresponding to a pump) driven by a motor, an air chamber to which air is supplied from the air compressor, and an exhaust valve (corresponding to an electromagnetic valve) that discharges the air in the air chamber. By changing the air pressure in the air chamber, a spring of a shock absorber can be adjusted in the expansion and contraction direction to adjust the vehicle height.

### CITATION LIST

### PATENT LITERATURE

Patent Literature 1: JP7012758B
Patent Literature 2: JPH06-051478B

### SUMMARY OF INVENTION

### TECHNICAL PROBLEM

However, since the vehicle hydraulic system known in Patent Literature 1 uses the screw pump, there is a limit to quickly flowing the hydraulic fluid between the cylinder and the hydraulic jack according to the driving situation of the straddle-type vehicle.

On the other hand, in the vehicle pneumatic system known in Patent Literature 2, when the vehicle height is reduced, air in the air chamber is discharged by opening the exhaust valve (the electromagnetic valve). Therefore, the vehicle height can be quickly adjusted according to the driving situation of the straddle-type vehicle. However, the technique in Patent Literature 2 uses a relatively expensive exhaust valve (electromagnetic valve) and requires wiring for controlling the exhaust valve. This is disadvantageous in reducing the cost of the vehicle hydraulic system.

An object of the present invention is to provide a technique capable of quickly adjusting a vehicle height of a straddle-type vehicle and reducing the cost of a vehicle hydraulic system.

### SOLUTION TO PROBLEM

As a result of intensive studies, the present inventors have focused on the fact that the discharge direction of the hydraulic fluid by the pump interposed in the hydraulic circuit can be switched by switching the pump between the forward rotation operation and the reverse rotation operation. Then, it has been found that the flow direction in the hydraulic circuit can be switched by interposing, in the hydraulic circuit, a switching valve that performs a switching operation according to a change in the suction pressure and the discharge pressure of the pump. The present invention was completed based on these findings.

The present disclosure provides a vehicle hydraulic system having: a hydraulic circuit connecting a reservoir that stores a hydraulic fluid and a hydraulic jack; a pump interposed in the hydraulic circuit, and capable of a forward rotation operation and a reverse rotation operation; and a switching valve configured to switch a flow direction in the hydraulic circuit according to a change in suction pressure and discharge pressure of the pump due to switching between the forward rotation operation and the reverse rotation operation of the pump.

### ADVANTAGEOUS EFFECTS OF INVENTION

According to the present invention, the vehicle height of the straddle-type vehicle can be quickly adjusted, and the cost of the vehicle hydraulic system can be reduced.

### BRIEF DESCRIPTION OF DRAWINGS

[FIG. 1] FIG. 1 is a cross-sectional view of a hydraulic shock absorber including a vehicle height adjustment device according to Example 1.
[FIG. 2] FIG. 2 is a hydraulic circuit diagram of a vehicle hydraulic system shown in FIG. 1.
[FIG. 3] FIG. 3 is a diagram showing a flow of a hydraulic fluid when the vehicle height of the vehicle hydraulic system shown in FIG. 2 is increased.
[FIG. 4] FIG. 4 is a diagram showing a flow of a hydraulic fluid when the vehicle height of the vehicle hydraulic system shown in FIG. 2 is reduced.
[FIG. 5] FIG. 5 is a hydraulic circuit diagram of a vehicle hydraulic system of a vehicle height adjustment device according to Example 2.
[FIG. 6] FIG. 6 is a diagram showing a flow of a hydraulic fluid when the vehicle height of the vehicle hydraulic system shown in FIG. 5 is increased.

### DESCRIPTION OF EMBODIMENTS

Embodiments of the present invention will be described below with reference to the accompanying drawings. The embodiments shown in the accompanying drawings are examples of the present invention, and the present invention is not limited to the embodiments.

### <Example 1>

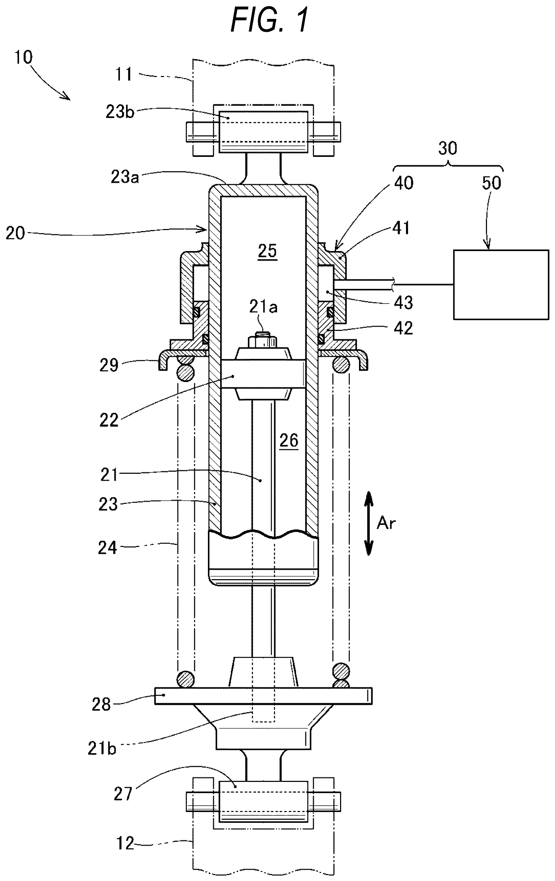

With reference to FIGS. 1 to 4, a hydraulic shock absorber 20 according to Example 1 provided in a straddle-type vehicle 10, a vehicle height adjustment device 30 provided in the hydraulic shock absorber 20, and a vehicle hydraulic system 50 provided in the vehicle height adjustment device 30 will be described.

As shown in FIG. 1, the hydraulic shock absorber 20 (a suspension device 20) is used in, for example, a vehicle, and as an example, is used as a rear cushion of a motorcycle 10. The motorcycle 10 is a type of straddle-type vehicle on which a rider straddles. In the following, the motorcycle 10 may be referred to as a "straddle-type vehicle 10" or a "vehicle 10".

The hydraulic shock absorber 20 includes a piston rod 21, a piston 22 provided at one end portion 21a of the piston rod 21, a damper tube 23 that accommodates the piston 22 in a reciprocating manner, and a suspension spring 24 that biases the damper tube 23 and the piston rod 21 in opposite directions. The inside of the damper tube 23 is partitioned into two oil chambers 25 and 26 by the piston 22.

The one end portion 23a of the closed damper tube 23 is provided with a first support portion 23b. The first support portion 23b is swingably supported on a vehicle body 11 of the motorcycle 10. The other end portion 21b of the piston rod 21 is provided with a second support portion 27. The second support portion 27 is swingably supported on a wheel support mechanism 12 of the motorcycle 10. The wheel support mechanism 12 extends rearward from the rear portion of the vehicle body 11, is represented by a link mechanism or a swing arm that can swing in the upper-lower direction, and supports a rear wheel (not shown).

The suspension spring 24 is implemented by a compression coil spring located so as to surround the outer peripheral surface of the damper tube 23. Both ends of the suspension spring 24 are supported by a retainer 28 provided on a second end portion 21b of the piston rod 21 and a spring seat 29.

The hydraulic shock absorber 20 further includes the vehicle height adjustment device 30 that adjusts the suspension spring 24 in an expansion and contraction direction Ar. The vehicle height adjustment device 30 includes a hydraulic jack 40 that adjusts the suspension spring 24 in the expansion and contraction direction Ar, and the hydraulic system 50 (the vehicle hydraulic system 50) that controls the hydraulic pressure of the hydraulic jack 40.

The hydraulic jack 40 is located on the opposite side of the retainer 29 with respect to the suspension spring 24. The hydraulic jack 40 has a jack housing 41 and a plunger 42.

The jack housing 41 is a tubular member that surrounds the outer peripheral surface of the damper tube 23, and is open only on the side where the suspension spring 24 is provided. The space between the outer peripheral surface of the damper tube 23 and the jack housing 41 is sealed. An inside 43 of the jack housing 41 is referred to as a "jack chamber 43".

The plunger 42 is an annular member fitted to the outer peripheral surface of the damper tube 23 so as to be movable forward and backward, and is held in the jack chamber 43 so as to be movable forward and backward. The plunger 42 presses the suspension spring 24. The space between the plunger 42 and the jack chamber 43 is sealed. The jack chamber 43 is filled with a hydraulic fluid (for example, oil) capable of pushing out the plunger 42 in the advancing direction. The plunger 42 advances and retracts by adjusting the hydraulic pressure of the hydraulic fluid in the jack chamber 43. As a result, the suspension spring 24 can be adjusted in the expansion and contraction direction Ar by the plunger 42.

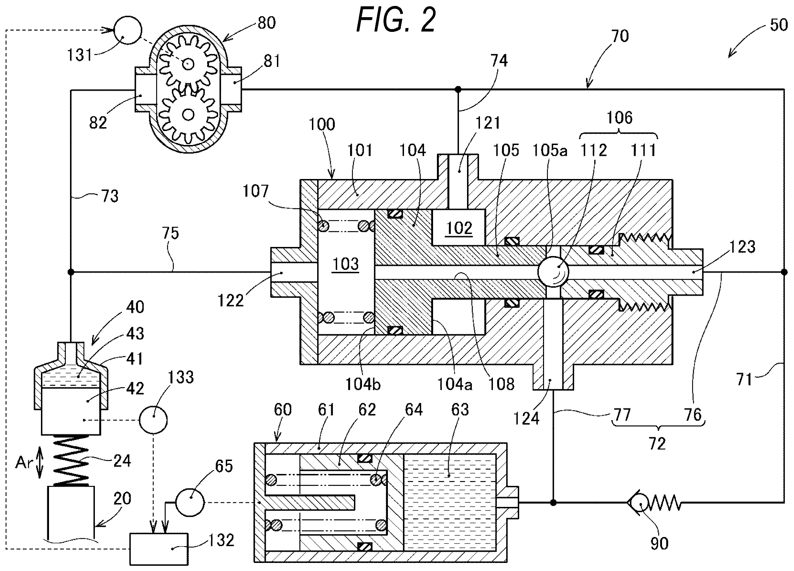

As shown in FIG. 2, the vehicle hydraulic system 50 has a reservoir 60 that stores the hydraulic fluid (for example, oil), a hydraulic circuit 70 that connects the reservoir 60 (a fluid chamber 63) and the jack chamber 43 of the hydraulic jack 40, and a pump 80, a check valve 90, and a switching valve 100 that are interposed in the hydraulic circuit 70. The number of reservoirs 60, the number of pumps 80, the number of check valves 90, and the number of switching valves 100 are each one.

The reservoir 60 has , for example, a reservoir housing 61, a piston 62 slidable inside the reservoir housing 61, a fluid chamber 63 defined by the reservoir housing 61 and the piston 62, and a biasing member 64 that biases the piston 62 toward the fluid chamber 63. Since the piston 62 is biased by the biasing member 64, the piston 62 is movable according to the storage amount of the hydraulic fluid stored in the fluid chamber 63. The storage amount of the hydraulic fluid stored in the fluid chamber 63 is detected by a storage amount sensor 65. The storage amount sensor 65 can obtain data of the storage amount by, for example, detecting the stroke of the piston 62.

The pump 80 is driven by a motor 131, and can perform a forward rotation operation and a reverse rotation operation by switching the rotation direction of the motor 131. The pump 80 has two connection ports 81 and 82 (a first connection port 81 and a second connection port 82) capable of suctioning and discharging the hydraulic fluid.

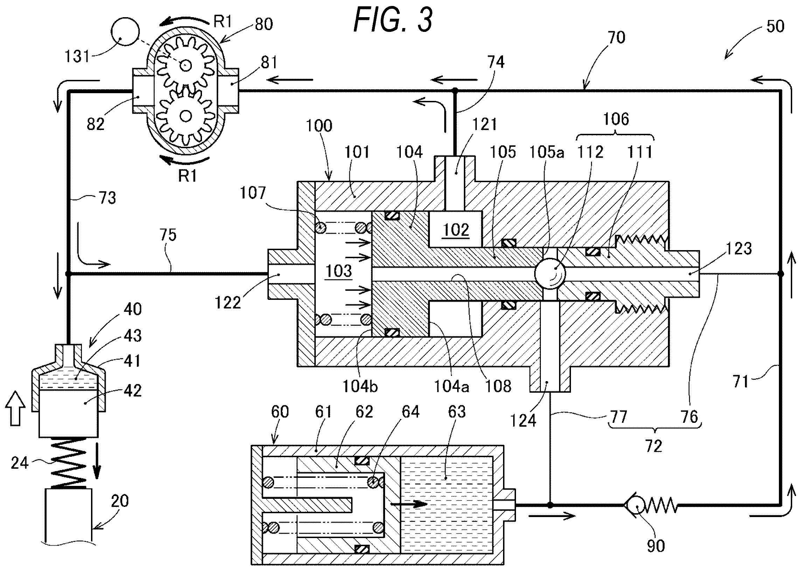

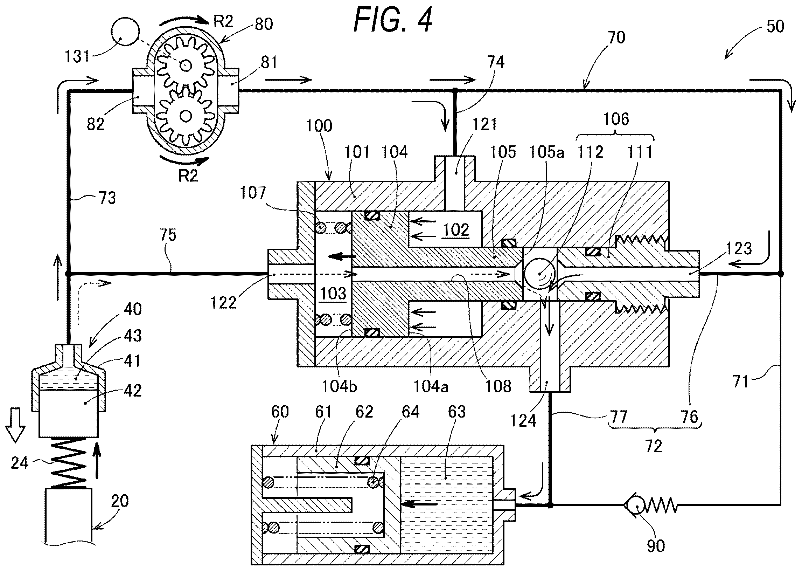

For example, when the pump 80 performs the forward rotation operation (rotation in a first direction R1 shown in FIG. 3), the pump 80 suctions the hydraulic fluid from the first connection port 81 and discharges the hydraulic fluid from the second connection port 82. At this time, the suction pressure of the first connection port 81 is negative, and the discharge pressure of the second connection port 82 is positive. When the pump 80 performs the reverse rotation operation (rotation in a second direction R2 shown in FIG. 4), the pump 80 suctions the hydraulic fluid from the second connection port 82 and discharges the hydraulic fluid from the first connection port 81. At this time, the suction pressure of the second connection port 82 is negative, and the discharge pressure of the first connection port 81 is positive. The first direction R1 may be referred to as a "forward rotation operation direction R1 of the pump 80", and the second direction R2 may be referred to as a "reverse rotation operation direction R2 of the pump 80".

In this way, the suction pressure and the discharge pressure of the pump 80 are changed by switching between the forward rotation operation and the reverse rotation operation of the pump 80. An example of this type of pump 80 is a gear pump. As the gear pump, an external gear pump is preferably used in which two gears are externally connected to each other. The pump 80 is not limited to the configuration of the gear pump.

The check valve 90 is interposed between the reservoir 60 (the fluid chamber 63) and the pump 80, and is a so-called suction check valve that can be opened only by a suction pressure at which the hydraulic fluid stored in the reservoir 60 is suctioned by the pump 80.

The switching valve 100 (the direction switching valve 100) can switch the flow direction in the hydraulic circuit 70 according to a change in the suction pressure and the discharge pressure of the pump 80 due to switching between the forward rotation operation and the reverse rotation operation of the pump 80. More specifically, the switching valve 100 can switch the flow direction in the hydraulic circuit 70 according to a change in the suction pressure and the discharge pressure of the pump 80 due to switching of the pump 80 to one of the forward rotation operation and the reverse rotation operation.

Specifically, the switching valve 100 has a valve housing 101, a piston 104 that partitions the inside of the valve housing 101 into a first fluid chamber 102 and a second fluid chamber 103 and that slides, a plunger 105 provided integrally with the piston 104, and a valve mechanism 106 that can be opened and closed by the plunger 105.

The space between the first fluid chamber 102 and the second fluid chamber 103 is sealed in a liquid-tight manner. A surface 104a of the piston 104 on the first fluid chamber 102 side may be referred to as a "first pressure receiving surface 104a", and a surface 104b of the piston 104 on the second fluid chamber 103 side may be referred to as a "second pressure receiving surface 104b".

The piston 104 is biased by the biasing member 107 from the second fluid chamber 103 toward the first fluid chamber 102. Therefore, a distal end 105a of the plunger 105 is biased by the biasing member 107 together with the piston 104 from the second fluid chamber 103 toward the first fluid chamber 102. The biasing member 107 is accommodated in the second fluid chamber 103, and is implemented by, for example, a compression coil spring.

Further, the piston 104 and the plunger 105 have a return flow path 108 penetrating from the second pressure receiving surface 104b to the distal end 105a of the plunger 105 in the sliding direction of the piston 104. One end of the return flow path 108 communicates with the second fluid chamber 103, and the other end of the return flow path 108 opens to the distal end 105a of the plunger 105.

The valve mechanism 106 (the valve 106) is incorporated in the valve housing 101, and has a valve seat 111 provided in the valve housing 101 so as to be restricted from moving, and a valve body 112 capable of opening and closing with respect to the valve seat 111. The valve seat 111 is located to face the distal end 105a of the plunger 105. The valve body 112 is implemented by, for example, a ball.

The valve body 112 is pressed against the valve seat 111 by the distal end 105a of the plunger 105, thereby maintaining a closed state (a fully closed state) with the valve seat 111. Therefore, the valve mechanism 106 is in the closed state. In a state in which the valve mechanism 106 is in the closed state, that is, in a state in which the distal end 105a of the plunger 105 presses the valve body 112 against the valve seat 111, the other end (the end on the distal end 105a side of the plunger 105) of the return flow path 108 is closed by the valve body 112.

When the liquid force of the first fluid chamber 102 exceeds a preset reference pressure, the piston 104 and the plunger 105 are displaced toward the second fluid chamber 103, so that the valve body 112 is opened from the valve seat 111. Therefore, the valve mechanism 106 is in an opened state. In a state in which the valve mechanism 106 is opened, the other end (the end on the distal end 105a side of the plunger 105) of the return flow path 108 is opened from the valve body 112.

In this way, the valve body 112 can be opened and closed with respect to the valve seat 111, and can also open and close the return flow path 108.

The valve housing 101 has a first port 121 communicating with the first fluid chamber 102, a second port 122 communicating with the second fluid chamber 103, a third port 123 on the liquid inlet side communicating with the opening of the valve seat 111 of the valve mechanism 106, and a fourth port 124 on the liquid outlet side of the valve mechanism 106.

The hydraulic circuit 70 has a first flow path 71 that connects the first connection port 81 of the pump 80 and the reservoir 60 (the fluid chamber 63) via the check valve 90, a second flow path 72 that connects the first connection port 81 of the pump 80 and the reservoir 60 (the fluid chamber 63) via the valve mechanism 106, a third flow path 73 that connects the second connection port 82 of the pump 80 and the jack chamber 43, a fourth flow path 74 that connects the first connection port 81 of the pump 80 and the first port 121 of the valve housing 101, and a fifth flow path 75 that connects the second connection port 82 of the pump 80 and the second port 122 of the valve housing 101.

The second flow path 72 includes, for example, a first branch path 76 and a second branch path 77. The first branch path 76 branches from the first flow path 71 between the first connection port 81 of the pump 80 and the check valve 90, and is connected to the third port 123. The second branch path 77 branches from the first flow path 71 between the reservoir 60 (the fluid chamber 63) and the check valve 90, and is connected to the fourth port 124.

The fourth flow path 74 branches from, for example, the first flow path 71 between the first connection port 81 of the pump 80 and the check valve 90, and is connected to the first port 121.

In this way, the first connection port 81 of the pump 80 directly communicates with the first fluid chamber 102 of the switching valve 100, communicates with the reservoir 60 (the fluid chamber 63) via the valve mechanism 106, and communicates with the reservoir 60 (the fluid chamber 63) via the check valve 90. Therefore, the first fluid chamber 102 communicates with the reservoir 60 (the fluid chamber 63) via the valve mechanism 106.

The fifth flow path 75 branches from, for example, the third flow path 73 between the second connection port 82 of the pump 80 and the jack chamber 43, and is connected to the second port 122. Therefore, the second connection port 82 of the pump 80 communicates with the jack chamber 43, the second fluid chamber 103, and the return flow path 108.

The connection relationship of the portions by the hydraulic circuit 70 described above is summarized as follows. The reservoir 60 (the fluid chamber 63) is connected to the first connection port 81 of the pump 80 via the check valve 90. The jack chamber 43 is connected to the second connection port 82 of the pump 80. The first port 121 of the valve housing 101 is connected to the first connection port 81 of the pump 80. The second port 122 of the valve housing 101 is connected to the second connection port 82 of the pump 80. The third port 123 of the valve housing 101 is connected to the first connection port 81 of the pump 80. The fourth port 124 of the valve housing 101 is connected to the reservoir 60.

A detection signal of the storage amount sensor 65 of the reservoir 60 is sent to a control unit 132. The hydraulic jack 40 has a movement amount sensor 133 that detects the movement amount of the plunger 32 with respect to the jack housing 31, that is, the expansion and contraction amount (the adjustment amount of the suspension spring 24) of a jack portion 30. A detection signal of the movement amount sensor 133 is sent to the control unit 132. The control unit 132 controls the rotation direction and the rotation speed of the pump 80 by controlling the rotation direction and the rotation speed of the motor 131.

Here, the return flow path 108 of the switching valve 100 is summarized as follows. As shown in FIGS. 2 to 4, the switching valve 100 has:
the piston 104 configured to slide in the axial direction according to a change in suction pressure and discharge pressure of the pump 80 due to switching between the forward rotation operation and the reverse rotation operation of the pump 80;
the plunger 105 that extends from the piston 104 in the sliding direction of the piston 104; and
the valve 106 (the valve mechanism 106) that can switch the flow direction in the hydraulic circuit 70 by the valve body 112 being pushed by the plunger 105 by the sliding operation of the piston 104.

The piston 104 and the plunger 105 have the return flow path 108 penetrating in the sliding direction of the piston 104. The return flow path 108 is closed by the valve body 112 of the valve 106, and can be opened from the valve body 112 according to the opening operation of the valve 106 by the plunger 105. The jack chamber 43 of the hydraulic jack 40 and the reservoir 60 (the fluid chamber 63) communicate with each other by the flow paths 75 and 77 via the return flow path 108 in addition to the flow paths 73, 71, and 72 via the pump 80.

Next, the operation of the vehicle hydraulic system 50 will be described.

FIG. 2 shows that the pump 80 is in a stopped state. In the stopped state of the pump 80, the hydraulic circuit 70 is entirely closed to block the flow of the hydraulic fluid. That is, the check valve 90 is closed. Since the first fluid chamber 102 is not pressurized, the piston 104 is biased from the second fluid chamber 103 toward the first fluid chamber 102 by the biasing member 107. Therefore, the valve mechanism 106 is closed. The return flow path 108 is closed by the valve body 112 of the valve mechanism 106. The hydraulic pressure in the jack chamber 43 is maintained. Therefore, the length of the suspension spring 24 is not adjusted by the hydraulic jack 40. The vehicle height of the motorcycle 10 is maintained at the current height.

Thereafter, as shown in FIG. 3, when the motor 131 drives the pump 80 in the forward rotation operation (rotation in the first direction R1), the vehicle hydraulic system 50 performs the following operation.

The pump 80 performs the forward rotation operation (rotation in the first direction R1) to suction the hydraulic fluid stored in the reservoir 60 from the first connection port 81 via the check valve 90 and discharge the hydraulic fluid from the second connection port 82 to the jack chamber 43. As a result, the hydraulic pressure in the jack chamber 43 increases. Therefore, the vehicle height of the motorcycle 10 is increased (jack-up operation). The valve mechanism 106 and the return flow path 108 are maintained in a closed state.

By controlling the rotation speed of the pump 80, the flow rate of the hydraulic fluid flowing from the reservoir 60 to the jack chamber 43 via the check valve 90 and the pump 80 can be increased or decreased. The rotation speed of the pump 80 is controlled by controlling the rotation speed of the motor 131 by the control unit 132 (see FIG. 2).

Thereafter, since the pump 80 is stopped to close the check valve 90, the jack-up operation is stopped. The vehicle height of the motorcycle 10 is maintained at the current height.

On the other hand, as shown in FIG. 4, when the motor 131 drives the pump 80 in the reverse rotation operation (rotation in the second direction R2) from the state shown in FIG. 2, the vehicle hydraulic system 50 performs the following operation.

The pump 80 performs the reverse rotation operation (rotation in the second direction R2) to suction the hydraulic fluid in the jack chamber 43 from the second connection port 82 and discharge the hydraulic fluid from the first connection port 81. At this time, the suction pressure of the second connection port 82 is negative, and the discharge pressure of the first connection port 81 is positive. Therefore, the check valve 90 is closed. In the switching valve 100, the first fluid chamber 102 has a positive pressure, and the second fluid chamber 103 has a negative pressure. Therefore, the piston 104 and the plunger 105 are displaced toward the second fluid chamber 103, so that the valve body 112 is opened from the valve seat 111 (the valve mechanism 106 is opened). Simultaneously with the opening of the valve mechanism 106, the valve body 112 opens the return flow path 108.

When the valve mechanism 106 is opened, the hydraulic fluid in the jack chamber 43 flows (returns) from the third flow path 73 to the reservoir 60 via the pump 80, the first flow path 71, the first branch path 76, the third port 123 of the valve housing 101, the valve mechanism 106, the fourth port 124 of the valve housing 101, and the second branch path 77. As a result, the hydraulic pressure in the jack chamber 43 decreases. Therefore, the vehicle height of the motorcycle 10 is decreased (jack-down operation).

The hydraulic fluid discharged from the first connection port 81 of the pump 80 not only continues to push the piston 104 toward the second fluid chamber 103 by the discharge pressure of the hydraulic fluid, but also flows to the reservoir 60 via the opened valve mechanism 106. Therefore, the discharge pressure of the pump 80 does not become excessive. The operation of the pump 80 can be prevented from being in a locked state. Therefore, the durability of the pump 80 can be improved.

Moreover, by controlling the rotation speed of the pump 80, the flow rate of the hydraulic fluid flowing from the jack chamber 43 to the reservoir 60 via the pump 80 and the valve mechanism 106 can be increased or decreased. The rotation speed of the pump 80 is controlled by controlling the rotation speed of the motor 131 by the control unit 132 (see FIG. 2). For example, when the pump 80 performs the reverse rotation operation (at the time of the jack-down operation), the discharge amount of the pump 80 can be increased by increasing the rotation speed of the pump 80 as compared with that at the time of the jack-up operation. As a result, since the flow rate of the hydraulic fluid flowing from the jack chamber 43 to the reservoir 60 increases, the jack-down operation is performed quickly. The vehicle height of the motorcycle 10 can be quickly decreased.

Further, when the valve mechanism 106 is opened, the hydraulic fluid in the jack chamber 43 flows (returns) from the fifth flow path 75 to the reservoir 60 via the second port 122 of the valve housing 101, the second fluid chamber 103, the return flow path 108, the valve mechanism 106, the fourth port 124 of the valve housing 101, and the second branch path 77.

In this way, when the pump 80 performs the reverse rotation operation, the hydraulic fluid in the jack chamber 43 flows to the reservoir 60 by two systems, that is, a first system in which the hydraulic fluid flows through the switching valve 100 after passing through the pump 80 and a second system in which the hydraulic fluid directly flows through the switching valve 100 without passing through the pump 80. Therefore, the jack-down operation is faster than the jack-up operation. The vehicle height of the motorcycle 10 can be decreased more quickly.

Thereafter, the pump 80 is stopped, so that the valve mechanism 106 is closed as shown in FIG. 2. Therefore, the jack-down operation is stopped. The vehicle height of the motorcycle 10 is maintained at the current height.

### <Example 2>

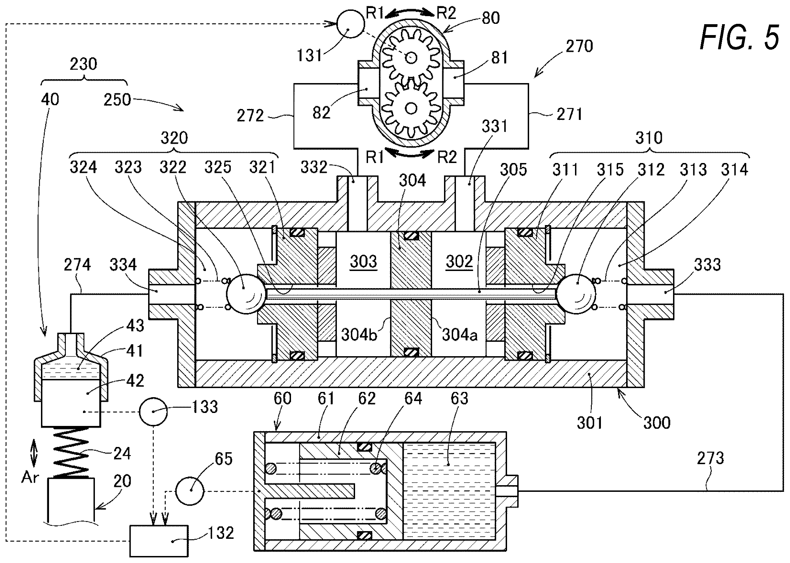

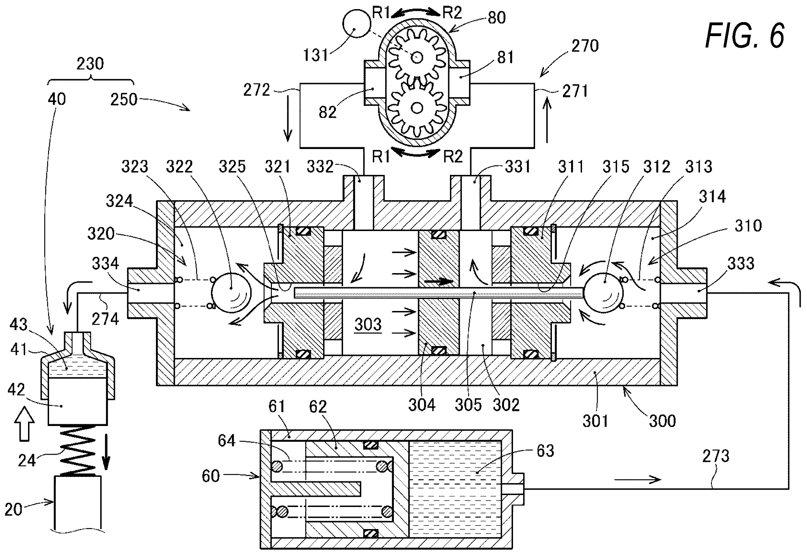

With reference to FIGS. 5 and 6, a vehicle height adjustment device 230 according to Example 2 and a vehicle hydraulic system 250 provided in the vehicle height adjustment device 230 will be described. FIG. 5 corresponds to FIG. 2 described above.

The vehicle hydraulic system 250 of the vehicle height adjustment device 230 according to Example 2 is characterized in that the hydraulic circuit 70 and the switching valve 100 according to Example 1 shown in FIGS. 1 to 4 described above are changed to a hydraulic circuit 270 and a switching valve 300 shown in FIGS. 5 and 6. Other configurations of the vehicle height adjustment device 230 are the same as those of the vehicle height adjustment device 30 according to Example 1 described above. The same reference signs will be used for the parts common to the vehicle height adjustment device 30 according to Example 1, and the detailed description thereof will be omitted.

The vehicle hydraulic system 250 according to Example 2 has the reservoir 60, the hydraulic circuit 270 connecting the reservoir 60 (the fluid chamber 63) and the hydraulic jack 40 (the jack chamber 43), and the pump 80 and the switching valve 300 that are interposed in the hydraulic circuit 270. The number of reservoirs 60, the number of pumps 80, and the number of switching valves 300 are each one. The check valve 90 (see FIG. 2) according to Example 1 is eliminated.

The switching valve 300 (the direction switching valve 300) has a piston 304 that slides in the axial direction according to a change in suction pressure and discharge pressure of the pump 80 due to switching between the forward rotation operation and the reverse rotation operation of the pump 80, and valves 310 and 320 (valve mechanisms 310 and 320) that are driven by the sliding of the piston 304 and that can switch the flow direction in the hydraulic circuit 270.

Specifically, the switching valve 300 has a valve housing 301, the piston 304 that partitions the inside of the valve housing 301 into a first fluid chamber 302 and a second fluid chamber 303 and that slides, a rod-shaped plunger 305 provided integrally with the piston 304, and the two valve mechanisms 310 and 320 (the first valve mechanism 310 and the second valve mechanism 320) that can be opened and closed by the plunger 305.

The space between the first fluid chamber 302 and the second fluid chamber 303 is sealed in a liquid-tight manner. A surface 304a of the piston 304 on the first fluid chamber 302 side may be referred to as a "first pressure receiving surface 304a", and a surface 304b of the piston 304 on the second fluid chamber 303 side may be referred to as a "second pressure receiving surface 304b". The plunger 305 extends to both sides of the piston 304 in the sliding direction of the piston 304.

The first valve mechanism 310 is incorporated in the valve housing 301, and is located on the side opposite to the piston 304 with respect to the first fluid chamber 302. The first valve mechanism 310 has a first valve seat 311 provided in the valve housing 301 so as to be restricted from moving, a first valve body 312 capable of opening and closing with respect to the first valve seat 311, and a first biasing member 313 that biases the first valve body 312 in a direction of closing with respect to the first valve seat 311. The first valve body 312 is implemented by, for example, a ball. The first biasing member 313 is implemented by, for example, a compression coil spring.

The first valve seat 311 is located on a side opposite to the piston 304 with respect to the first fluid chamber 302 so as to partition the first fluid chamber 302 in cooperation with the piston 304. A first valve chamber 314 (a first closed space 314) is partitioned by the valve housing 301 and the first valve seat 311. The first valve chamber 314 is formed on a side opposite to the first fluid chamber 302 with respect to the first valve seat 311. The space between the first fluid chamber 302 and the first valve chamber 314 is sealed in a liquid-tight manner.

The first valve chamber 314 houses the first valve body 312 and the first biasing member 313. Further, the first valve seat 311 has a first passage hole 315 penetrating between the first fluid chamber 302 and the first valve chamber 314 so that the hydraulic fluid can pass therethrough. The plunger 305 is slidably located in the first passage hole 315.

The second valve mechanism 320 is incorporated in the valve housing 301, and is located on the side opposite to the piston 304 with respect to the second fluid chamber 303. The second valve mechanism 320 has a second valve seat 321 provided in the valve housing 301 so as to be restricted from moving, a second valve body 322 capable of opening and closing with respect to the second valve seat 321, and a second biasing member 323 that biases the second valve body 322 in a direction of closing with respect to the second valve seat 321. The second valve body 322 is implemented by, for example, a ball. The second biasing member 323 is implemented by, for example, a compression coil spring.

The second valve seat 321 is located on a side opposite to the piston 304 with respect to the second fluid chamber 303 so as to partition the second fluid chamber 303 in cooperation with the piston 304. A second valve chamber 324 (a second closed space 324) is partitioned by the valve housing 301 and the second valve seat 321. The second valve chamber 324 is formed on a side opposite to the second fluid chamber 303 with respect to the second valve seat 321. The space between the second fluid chamber 303 and the second valve chamber 324 is sealed in a liquid-tight manner.

The second valve chamber 324 houses the second valve body 322 and the second biasing member 323. Further, the second valve seat 321 has a second passage hole 325 that penetrates between the second fluid chamber 303 and the second valve chamber 324 so that the hydraulic fluid can pass therethrough. The plunger 305 is slidably located in the second passage hole 325.

The valve housing 301 has a first port 331 communicating with the first fluid chamber 302, a second port 332 communicating with the second fluid chamber 303, a third port 333 communicating with the first valve chamber 314 of the first valve mechanism 310, and a fourth port 334 communicating with the second valve chamber 324 of the second valve mechanism 320.

The hydraulic circuit 270 has a first flow path 271 connecting the first port 331 of the valve housing 301 and the first connection port 81 of the pump 80, a second flow path 272 connecting the second port 332 of the valve housing 301 and the second connection port 82 of the pump 80, a third flow path 273 connecting the third port 333 of the valve housing 301 and the reservoir 60 (the fluid chamber 63), and a fourth flow path 274 connecting the fourth port 334 of the valve housing 301 and the jack chamber 43.

The connection relationship of the portions by the hydraulic circuit 270 is summarized as follows. The reservoir 60 (the fluid chamber 63) is connected to the first valve chamber 314. The first connection port 81 of the pump 80 is connected to the first fluid chamber 302. The second connection port 82 of the pump 80 is connected to the second fluid chamber 303. The jack chamber 43 is connected to the second valve chamber 324.

Next, the operation of the vehicle hydraulic system 250 will be described.

FIG. 5 shows that the pump 80 is in the stopped state. In the stopped state of the pump 80, the hydraulic circuit 270 is entirely closed to block the flow of the hydraulic fluid. The hydraulic pressure in the jack chamber 43 is maintained. Therefore, the length of the suspension spring 24 is not adjusted by the hydraulic jack 40. The vehicle height of the motorcycle 10 is maintained at the current height.

That is, neither the first fluid chamber 302 nor the second fluid chamber 303 is pressurized. In this state, the piston 304 and the plunger 305 are located at the neutral position shown in FIG. 5. The valve body 312 of the valve mechanism 310 and the valve body 322 of the valve mechanism 320 are pressed against the valve seats 311 and 321 by the biasing members 313 and 323 to maintain a closed state (a fully closed state) with the valve seats 311 and 321. Therefore, by closing the valve mechanisms 310 and 320, the first passage hole 315 and the second passage hole 325 are closed. Both ends of the plunger 305 are held in the neutral position by the valve bodies 312 and 322, so that the piston 304 is maintained in the neutral position.

Thereafter, as shown in FIG. 6, when the motor 131 drives the pump 80 in the forward rotation operation (rotation in the first direction R1), the vehicle hydraulic system 250 performs the following operation.

The pump 80 performs the forward rotation operation (rotation in the first direction R1), so that the suction pressure of the first connection port 81 becomes negative, and the discharge pressure of the second connection port 82 becomes positive. In the switching valve 300, the first fluid chamber 302 has a negative pressure, and the second fluid chamber 303 has a positive pressure. The piston 304 and the plunger 305 are pushed and displaced toward the first fluid chamber 302 by the discharge pressure to push the first valve body 312 and open the first valve body 312 from the first valve seat 311 (the first valve mechanism 310 is opened). When the pressure in the second fluid chamber 303 becomes positive, the second valve body 322 is separated from the first valve seat 311 (the second valve mechanism 320 is opened) due to the pressure difference from the second valve chamber 324.

Therefore, the hydraulic fluid stored in the reservoir 60 (the fluid chamber 63) is supplied to the jack chamber 43 through a path including the third flow path 273, the third port 333, the first valve chamber 314, the first valve mechanism 310, the first passage hole 315, the first fluid chamber 302, the first port 331, the first flow path 271, the first connection port 81 of the pump 80, the pump 80, the second connection port 82 of the pump 80, the second flow path 272, the second port 332, the second fluid chamber 303, the second passage hole 325, the second valve mechanism 320, the second valve chamber 324, the fourth port 334, and the fourth flow path 274. As a result, the hydraulic pressure in the jack chamber 43 increases. Therefore, the vehicle height of the motorcycle 10 is increased (jack-up operation).

By controlling the rotation speed of the pump 80, the flow rate of the hydraulic fluid flowing from the reservoir 60 to the jack chamber 43 via the first valve mechanism 310, the pump 80, and the second valve mechanism 320 can be increased or decreased. The rotation speed of the pump 80 is controlled by controlling the rotation speed of the motor 131 by the control unit 132 (see FIG. 5).

Thereafter, since the pump 80 is stopped to close the first valve mechanism 310 and the second valve mechanism 320, the jack-up operation is stopped. The vehicle height of the motorcycle 10 is maintained at the current height.

On the other hand, when the motor 131 drives the pump 80 in the reverse rotation operation (rotation in the second direction R2) from the state shown in FIG. 5, the vehicle hydraulic system 250 performs the following operation.

The pump 80 performs the reverse rotation operation (rotation in the second direction R2) to suction the hydraulic fluid in the jack chamber 43 from the second connection port 82 and discharge the hydraulic fluid from the first connection port 81. At this time, the suction pressure of the second connection port 82 is negative, and the discharge pressure of the first connection port 81 is positive. Therefore, the hydraulic fluid in the jack chamber 43 flows in a direction opposite to that when the pump 80 performs the forward rotation operation.

That is, the hydraulic fluid in the jack chamber 43 flows to the reservoir 60 (the fluid chamber 63) through a path including the fourth flow path 274, the fourth port 334, the second valve chamber 324, the second valve mechanism 320, the second passage hole 325, the second fluid chamber 303, the second port 332, the second connection port 82 of the pump 80, the pump 80, the first connection port 81 of the pump 80, the first flow path 271, the first port 331, the first fluid chamber 302, the first passage hole 315, the first valve mechanism 310, the first valve chamber 314, the third port 333, and the third flow path 273. As a result, the hydraulic pressure in the jack chamber 43 decreases. Therefore, the vehicle height of the motorcycle 10 is decreased (jack-down operation).

By controlling the rotation speed of the pump 80, the flow rate of the hydraulic fluid flowing from the jack chamber 43 to the reservoir 60 via the second valve mechanism 320, the pump 80, and the first valve mechanism 310 can be increased or decreased. The rotation speed of the pump 80 is controlled by controlling the rotation speed of the motor 131 by the control unit 132. For example, when the pump 80 performs the reverse rotation operation (at the time of the jack-down operation), the discharge amount of the pump 80 can be increased by increasing the rotation speed of the pump 80 as compared with that at the time of the jack-up operation. As a result, since the flow rate of the hydraulic fluid flowing from the jack chamber 43 to the reservoir 60 increases, the jack-down operation is performed quickly. The vehicle height of the motorcycle 10 can be quickly decreased.

Thereafter, since the pump 80 is stopped to close the first valve mechanism 310 and the second valve mechanism 320 as shown in FIG. 5, the jack-up operation is stopped. The vehicle height of the motorcycle 10 is maintained at the current height.

As is clear from the above description, the reservoir 60, the switching valve 300, the pump 80, and the jack chamber 43 are connected in series to the hydraulic circuit 270. That is, the reservoir 60 (the fluid chamber 63), the first valve mechanism 310, the first passage hole 315, the first fluid chamber 302, the pump 80, the second fluid chamber 303, the second passage hole 325, the second valve mechanism 320, and the jack chamber 43 are connected in series. Therefore, the hydraulic fluid discharged from the pump 80 not only continues to push the piston 304 toward the first fluid chamber 302 or the second fluid chamber 303 by the discharge pressure of the hydraulic fluid, but also flows between the jack chamber 43 and the reservoir 60 via the opened first valve mechanism 310 and second valve mechanism 320. Therefore, the discharge pressure of the pump 80 does not become excessive. The operation of the pump 80 can be prevented from being in the locked state. Therefore, the durability of the pump 80 can be improved.

The vehicle hydraulic system 50; 250 and the vehicle height adjustment device 30; 230 including the vehicle hydraulic system 50; 250 described above are summarized as follows.

FIGS. 2 and 5 will be referred to. According to the present example, a vehicle hydraulic system 50; 250 according to a first aspect has: a hydraulic circuit 70; 270 connecting a reservoir 60 that stores a hydraulic fluid and a jack chamber 43 of a hydraulic jack 40; a pump 80 interposed in the hydraulic circuit 70; 270, and capable of a forward rotation operation and a reverse rotation operation; and a switching valve 100; 300 configured to switch a flow direction in the hydraulic circuit 70; 270 according to a change in suction pressure and discharge pressure of the pump 80 due to switching between the forward rotation operation and the reverse rotation operation of the pump 80.

The suction pressure and the discharge pressure of the pump 80 are changed by switching the rotation direction. The switching valve 100; 300 switches the flow direction in the hydraulic circuit 70; 270 according to the change in suction pressure and discharge pressure. As a result, the flow direction of the hydraulic fluid can be quickly switched between the reservoir 60 and the jack chamber 43. Moreover, since the flow direction of the hydraulic fluid by the switching valve 100; 300 is directly switched (switched and driven) by the discharge pressure (the pressurizing action) of the pump 80, it is not necessary to use a separate electromagnetic valve for switching the flow direction of the hydraulic fluid or a wiring for controlling the electromagnetic valve. Therefore, the vehicle height of the straddle-type vehicle 10 (the motorcycle 10) can be quickly adjusted, and the cost of the vehicle hydraulic system 50; 250 can be reduced.

FIGS. 2 and 5 will be referred to. The vehicle hydraulic system 50; 250 according to a second aspect is directed to the first aspect, in which a gear pump preferably constitutes the pump 80.

The pump 80 is a gear pump, so that it is possible to transfer a liquid having high viscosity. Therefore, the hydraulic fluid used in the vehicle hydraulic system 50; 250 is not limited to oil, and various types can be used.

Reference is made to FIG. 2. The vehicle hydraulic system 50 according to a third aspect is directed to the first and second aspects, in which the hydraulic circuit 70 preferably includes a check valve 90 to be opened only by a suction pressure at which the hydraulic fluid stored in the reservoir 60 is suctioned by the pump 80. The check valve 90 is preferably interposed between the reservoir 60 and the pump 80.

The check valve 90 interposed between the reservoir 60 and the pump 80 can be opened only by the suction pressure at which the hydraulic fluid is suctioned by the pump 80. Therefore, when the hydraulic fluid is sent from the reservoir 60 to the jack chamber 43, the backflow of the hydraulic fluid can be prevented by the check valve 90. Moreover, the check valve 90 can prevent the hydraulic fluid in the jack chamber 43 from flowing into the reservoir 60 when the pump 80 is stopped. Therefore, the vehicle height of the straddle-type vehicle 10 (the motorcycle 10) can be reliably maintained.

Reference is made to FIG. 2. The vehicle hydraulic system 50 according to a fourth aspect is directed to the first to third aspects, in which the switching valve 100 is preferably configured to switch a flow direction in the hydraulic circuit 70 according to a change in suction pressure and discharge pressure of the pump 80 due to switching of the pump 80 to any one of the forward rotation operation and the reverse rotation operation.

The switching valve 100 switches the flow direction in the hydraulic circuit 70 by the pressure change of the pump 80 when the rotation of the pump 80 is switched to one of the forward rotation operation and the reverse rotation operation. Therefore, the switching valve 100 has a simple configuration as compared with a case in which the flow direction in the hydraulic circuit 70 is switched when the rotation of the pump 80 is switched to both of the forward rotation operation and the reverse rotation operation.

Reference is made to FIG. 2. The vehicle hydraulic system 50 according to a fifth aspect is directed to the first to fourth aspects, in which the switching valve 100 includes: a piston 104 sliding in an axial direction according to a change in the suction pressure and the discharge pressure of the pump 80 due to switching between the forward rotation operation and the reverse rotation operation of the pump 80; and a valve 106 (a valve mechanism 106) driven by the sliding of the piston 104 and allowed to switch a flow direction in the hydraulic circuit 270.

The switching valve 100 that can be quickly opened and closed can be obtained by the combined structure of the piston 104 that can slide only by changing the suction pressure and the discharge pressure of the pump 80 and the valve 106 that can be driven by the piston 104 alone. Moreover, when the pump 80 is stopped, the discharge pressure of the pump 80 disappears, so that the valve 106 is reliably closed and the hydraulic fluid in the jack chamber 43 can be prevented from flowing to the reservoir 60. Therefore, the vehicle height of the straddle-type vehicle 10 (the motorcycle 10) can be reliably maintained.

FIGS. 2 and 5 will be referred to. The vehicle hydraulic system 250 according to a sixth aspect is directed to the first and second aspects, in which the pump 80 is preferably connected between the jack chamber 43 and the reservoir 60 via the switching valve 300.

Therefore, the hydraulic fluid discharged from the pump 80 flows between the jack chamber 43 and the reservoir 60 via the switched switching valve 300 while switching the operation of the switching valve 300 by the discharge pressure. Therefore, the operation of the pump 80 can be prevented from being in the locked state. The durability of the pump 80 can be improved.

FIGS. 1, 2, and 5 will be referred to. A vehicle height adjustment device 30; 230 according to a seventh aspect including the vehicle hydraulic system 50; 250 described in the first to sixth aspects, in which the hydraulic jack 40 is preferably located such that a suspension spring 24 of a suspension device 20 (a hydraulic shock absorber 20) is adjustable in an expansion and contraction direction Ar.

By using the inexpensive vehicle hydraulic system 50; 250 in the vehicle height adjustment device 30; 230, the cost of the vehicle height adjustment device 30; 230 can be reduced.

The present invention is not limited to the examples as long as the functions and effects of the present invention are exhibited.

### INDUSTRIAL APPLICABILITY

The vehicle hydraulic system 50; 250 and the vehicle height adjustment device 30; 230 including the vehicle hydraulic system 50; 250 according to the present invention are suitable for being mounted on the straddle-type vehicle 10.

### REFERENCE SIGNS LIST

- 10: straddle-type vehicle (motorcycle)
- 20: suspension device (hydraulic shock absorber)
- 24: suspension spring
- 30: vehicle height adjustment device
- 40: hydraulic jack
- 43: jack chamber
- 50: vehicle hydraulic system
- 60: reservoir
- 70: hydraulic circuit
- 80: pump
- 81: first connection port
- 82: second connection port
- 90: check valve
- 100: switching valve
- 104: piston
- 105: plunger
- 106: valve (valve mechanism)
- 230: vehicle height adjustment device
- 250: vehicle hydraulic system
- 270: hydraulic circuit
- 300: switching valve
- 310: valve (first valve mechanism)
- 320: valve (second valve mechanism)
- Ar: expansion and contraction direction of suspension spring
- R1: forward rotation operation direction (first direction) of pump
- R2: reverse rotation operation direction (second direction) of pump

## Claims

1. A vehicle hydraulic system comprising:
a hydraulic circuit connecting a reservoir that stores a hydraulic fluid and a jack chamber of a hydraulic jack;
a pump interposed in the hydraulic circuit, and capable of a forward rotation operation and a reverse rotation operation; and
a switching valve configured to switch a flow direction in the hydraulic circuit according to a change in suction pressure and discharge pressure of the pump due to switching between the forward rotation operation and the reverse rotation operation of the pump.

2. The vehicle hydraulic system according to claim 1,
wherein a gear pump constitutes the pump.

3. The vehicle hydraulic system according to claim 1,
wherein the hydraulic circuit includes a check valve to be opened only by a suction pressure at which the hydraulic fluid stored in the reservoir is suctioned by the pump, and
the check valve is interposed between the reservoir and the pump.

4. The vehicle hydraulic system according to claim 1,
wherein the switching valve is configured to switch a flow direction in the hydraulic circuit according to a change in suction pressure and discharge pressure of the pump due to switching of the pump to any one of the forward rotation operation and the reverse rotation operation.

5. The vehicle hydraulic system according to claim 1,
wherein the switching valve includes:
a piston sliding in an axial direction according to a change in the suction pressure and the discharge pressure of the pump due to switching between the forward rotation operation and the reverse rotation operation of the pump; and
a valve driven by the sliding of the piston and allowed to switch a flow direction in the hydraulic circuit.

6. The vehicle hydraulic system according to claim 1,
wherein the pump is connected between the jack chamber and the reservoir via the switching valve.

7. A vehicle height adjustment device comprising the vehicle hydraulic system according to any one of claims 1 to 6,
wherein the hydraulic jack is located such that a suspension spring of a suspension device is adjustable in an expansion and contraction direction.
